# EUROPEAN PATENT APPLICATION

(11) **EP 1 338 321 A1**
(43) Date of publication of application: **27.08.2003**
(21) Application number: 02003995.4
(22) Date of filing: 22.02.2002
(51) Int. Cl.: B01D 37/02

(54) **Einsatz von modifizierter Stärke als Getränkefilterhilfsmittel**

(71) Applicant: Anton Steinecker Maschinenfabrik GmbH, 85356 Freising-Attaching (DE)
(72) Inventor: Neuhaus, Burchard, c/o Anton Steinecker Maschinen-, 85356 Freising-Attaching (DE)
(74) Representative: Grünecker, Kinkeldey, Stockmair & Schwanhäusser Anwaltssozietät

(57) **Zusammenfassung**

Die Erfindung betrifft ein Getränkefilterhilfsmittel sowie ein Verfahren zur Getränkefiltration. Um eine hohe Filtrationsqualität und -quantität zu gewährleisten und eine unproblematische Entsorgung der Filterrückstände zu ermöglichen, wird ein Getränkefilterhilfsmittel eingesetzt, das zur Verringerung der Löslichkeit oberflächenmodifizierte Stärke umfasst. Beim erfindungsgemäßen Verfahren zur Getränkefiltration, insbesondere zur Bierfiltration wird zunächst ein Getränkefilterhilfsmittel, das hydrophobe oberflächenmodifizierte Stärke umfasst, zur Erzeugung eines Filterkuchens auf ein Filtermittel angeschwemmt, das Unfiltrat zur Filtration durch den Filterkuchen und das Filtermittel geleitet und als Filtrat abgeführt.

## Description

Die Erfindung betrifft ein Getränkefilterhilfsmittel sowie ein Verfahren zur Getränkefiltration, insbesondere zur Bierfiltration.

Bislang wurde zur Filtration von Fluiden in der Lebensmittel- und Genussmittelindustrie Kieselgur als Filterhilfsmittel eingesetzt. Unter Kieselgur versteht man die Fossilien einzelliger Kieselalgen aus Siliziumdioxid. Es werden Feinguren, Mittelguren und Grobguren unterschieden. Diese Guren kommen meist in Anschwemmfiltern zum Einsatz. Dabei wird das Filterhilfsmittel auf ein Filtermittel angeschwemmt und so ein Filterkuchen aufgebaut. Das Filtermittel kann ein Drahtnetz, ein Gewebe sonstigen Materials, ein feingelochtes Blech, eine Filterkerze etc. sein. Meist wird vor der eigentlichen Filtration eine Voranschwemmung vorgenommen und während der Filtration Kieselgur als laufende Dosage zugeführt.

Ein Nachteil der Verwendung von Kieselgur liegt in der Entsorgungsproblematik des Kieselgurschlamms nach der Filtration. Allein in der Bundesrepublik Deutschland fallen im Brauereiwesen jährlich 70.000 Tonnen Kieselgurschlamm an. Die Möglichkeiten einer Entsorgung sind begrenzt und/oder sehr kostspielig. Eine Verschärfung der EU-Richtlinien verlangt zukünftig eine Entsorgung nicht mehr nur auf einer Deponie, sondern auf einer Sondermülldeponie. Auch eine Regeneration durch Erhitzen oder chemischer Behandlung ist nur in Grenzen möglich, da hierbei die Qualität des Ausgangsmaterials, beispielsweise die Partikelgröße der Kieselgur nicht wieder erreicht wird. Nur unter sehr großem und unwirtschaftlichem Aufwand besteht die Möglichkeit, grobe Gur und feine Gur, Zellstoff oder Asbest, Stabilisierungsmittel und Aktivkohle voneinander zu trennen.

Ein weiterer Nachteil entsteht durch eine gewisse Unklarheit über die gesundheitliche Gefährdung durch Kieselgur. Nach Vorgabe der EU-Richtlinien wird Kieselgur in die cancerogene Klasse 1 eingestuft. Dies zieht zukünftige Handlingprobleme im Umgang mit dieser Substanz nach sich.

Weiterhin ist der Einsatz von Baumwoll- und Zellulosefasern oder Zelluloseschichten in der Filtration von Fluiden in der Lebens- und Genussmittelherstellung bekannt. Dazu zählen Baumwoll- und Holzfasern.

Auch Kombinationen von Zellulosefasern mit Polyethylenfasern, α-Aluminiumoxid hoher Reinheit oder PVPP sind bekannt.

Weiterhin bekannt ist der Einsatz von Bastfasern als Hilfsmittel, welche sich durch ihre Mophologie und ihre chemische Zusammensetzung von den Baumwoll- und Zellulosefasern unterscheiden.

Die Verwendung der erwähnten Fasermaterialien erweist sich in der Praxis noch problematisch und erbringt nicht die vergleichbaren Filtrationsqualitäten und Filtrationsleistungen.

Hiervon ausgehend liegt der vorliegenden Erfindung die Aufgabe zugrunde, ein Getränkefilterhilfsmittel, sowie ein Verfahren zur Getränkefiltration bereitzustellen, die eine hohe Filtrationsqualität und -quantität gewährleisten, kostengünstig sind und darüber hinaus eine unproblematische Entsorgung der Filterrückstände ermöglichen.

Erfindungsgemäß wird diese Aufgabe durch ein Getränkefilterhilfsmittel gelöst, das dadurch gekennzeichnet ist, dass es zur Verringerung der Löslichkeit oberflächenmodifizierte Stärke umfasst, sowie durch die Verwendung eines solchen Getränkefilterhilfsmittels zur Filtration von Getränken, insbesondere von Bier. Diese Aufgabe wird weiter durch ein Verfahren zur Getränkefiltration, insbesondere zur Bierfiltration gelöst, wobei ein Getränkefilterhilfsmittel, das hydrophobe oberflächenmodifizierte Stärke umfasst, zur Erzeugung eines Filterkuchens auf ein Filtermittel angeschwemmt wird, das Unfiltrat zur Filtration durch den Filterkuchen und das Filtermittel geleitet wird und als Filtrat abgeführt wird.

Der Einsatz von oberflächenmodifizierter Stärke bringt den Vorteil mit sich, dass derartige Stärken nicht kaltwasserlöslich und nicht heißwasserlöslich sind, während native Stärken zwar nicht kaltwasserlöslich sind, sich jedoch in heißem Wasser lösen und nicht ausreichend stabil bei einem PH-Wert zwischen 4 bis 7,5 sind und gegenüber den in Lebensmitteln üblichen Gehalt an gelöstem CO₂. Dies bedeutet, dass die oberflächenmodifizierten Stärken sich bei der Filtration als stabiler Filterkuchen anlagem können, ohne dass sie sich im wässrigen Unfiltrat auflösen. Weiter wird die Festigkeit gegenüber physikalischen Einflüssen erhöht und das Kaltfließverhalten verbessert, sowie die Retrogradation verhindert. Die Verwendung von oberflächenmodifizierter Stärke als Filterhilfsmittel bringt weiter im Vergleich zur Kieselgurfiltration höhere Durchflussraten bei gleicher Filterstandzeit, d.h. bei einer gleichen Anzahl von Trennläufen mit sich. Ein weiterer, erheblicher Vorteil der modifizierten Stärken ist die problemlose Entsorgung, beispielsweise Kompostierung und Fermentierung (Biogasproduktion) oder einfach die Verfütterung als Tiermehlersatz.

Die Stärke kann entweder chemisch oder aber physikalisch oberflächenmodifiziert werden, solange die Löslichkeit in Wasser im Vergleich zu den nativen Stärken verringert wird.

Vorzugsweise werden als oberflächenmodifizierte Stärken Stärkeester oder Stärkeether, insbesondere mit Phosphorsäure veresterte Stärke verwendet. Dabei sind die freien Hydroxylgruppen am Stärkemolekül durch den Einbau von Ester- oder Ethergruppen verändert. Derartige Stärkeether bzw. -ester sind einfach und kostengünstig herzustellen.

Aufgrund der schlechten Wasserlöslichkeit und der hohen Festigkeit der oberflächenmodifizierten Stärken, ergibt sich eine hohe Standzeit, so dass keine Zudosierung von weiteren Getränkefilterhilfsmitteln nötig ist, sondern eine Filtration ausschließlich mit oberflächenmodifizierter Stärke möglich ist. Bei Bedarf kann jedoch für bestimmte Filterprozesse das Getränkefilterhilfsmittel neben der oberflächenmodifizierten Stärke auch mindestens einen Stoff der folgenden Gruppe umfassen: mineralische Substanzen, wie Kieselguren, Perliten, Aluminiumoxid, Titandioxid, Quarzmehl und/oder PVPP und/oder Fasern, wie etwa Baumwoll- und Zellulosefasem oder Bastfasern.

Als Getränkefilterhilfsmittel können unterschiedliche Stärken wie z.B. Kartoffelstärke, Tapiokastärke, Maisstärke, Weizenstärke, Reisstärke verwendet werden. Da die unterschiedlichen Stärken unterschiedliche Korngrößenverteilungen aufweisen, kann, ähnlich wie bei der Kieselgurfiltration, mit unterschiedlichen Zusammensetzungen die Stabilität und die Trennschärfe des Filterkuchens beeinflusst und gewährleistet werden. Vorzugsweise liegt die Korngröße in einem Bereich von 1 bis 100 µm.

Dabei werden bei der Voranschwemmung vorzugsweise gröbere Stärkekörner verwendet, während bei der laufenden Dosage des Getränkefilterhilfsmittels eine geringere Korngröße verwendet wird. So eignen sich beispielsweise entsprechend einer Feingur Korngrößen in einem Bereich von 1 bis 10 µm, entsprechend einer Mittelgur Korngrößen in einem Bereich von 40 bis 50 µm und entsprechend einer Grobgur Korngrößen in einem Bereich von 70 bis 100 µm.

Die oberflächenmodifizierte Stärke kann ein ionisch (an- oder kationisch) geladenes Stärkederivat sein, das zusätzlich zu den oben erwähnten Eigenschaften noch adsorbtive Eigenschaften aufweist.

Nach der Filtration wird das Filtermittel von dem Getränkefilterhilfsmittel gereinigt. Dadurch, dass die oberflächenmodifizierten Stärken nicht heißwasserlöslich sind, kann das Filtermittel auf einfache Weise beispielsweise mit Heißdampf gereinigt werden. Somit kann das Getränkefilterhilfsmittel einfach von dem Filtermittel abgetrennt werden und weiter als Wertstoff verwendet werden. Es ist auch möglich, dass das von dem Filtermittel abgetrennte Getränkefilterhilfsmittel dann enzymatisch regeneriert wird und erneut als Filterhilfsmittel eingesetzt wird. Sogar als Kohlenstoffquelle für Mikroorganismen, die fermativ Biopolymere produzieren, kann der Filtrationsschlamm eingesetzt werden.

Die vorliegende Erfindung wird nachfolgend unter Bezugnahme der Figuren näher erläutert.

Wie bereits erwähnt, kann der Filterkuchen nach der Fiiltration verfüttert oder zur Biogaserzeugung verwendet werden.

Dabei zeigt
- Figur 1: eine schematische Schnittdarstellung eines Kerzenfilters,
- Figuren 2a und 2b: die Strukturformeln von Amylose und Amylopektin,
- Figur 3: die Strukturformel einer oberflächenmodifizierten Stärke,
- Figur 4: zeigt die Kornstruktur verschiedener Stärken,
- Figur 5: zeigt einen Überblick über die unterschiedlichen Stärkemodifikationen.

Gemäß der vorliegenden Erfindung werden als neues umweltfreundliches Filterhilfsmittel Polysaccharide in Form von oberflächenmodifizierter Stärke verwendet.

Bei den Polysacchariden handelt es sich um Stärken verschiedener pflanzlicher Herkunft. Die Stärken lassen sich in eine Amylose- und eine Amylopetinfraktion unterteilen und sind in ihrem Verhältnis je nach Herkunft verschieden.

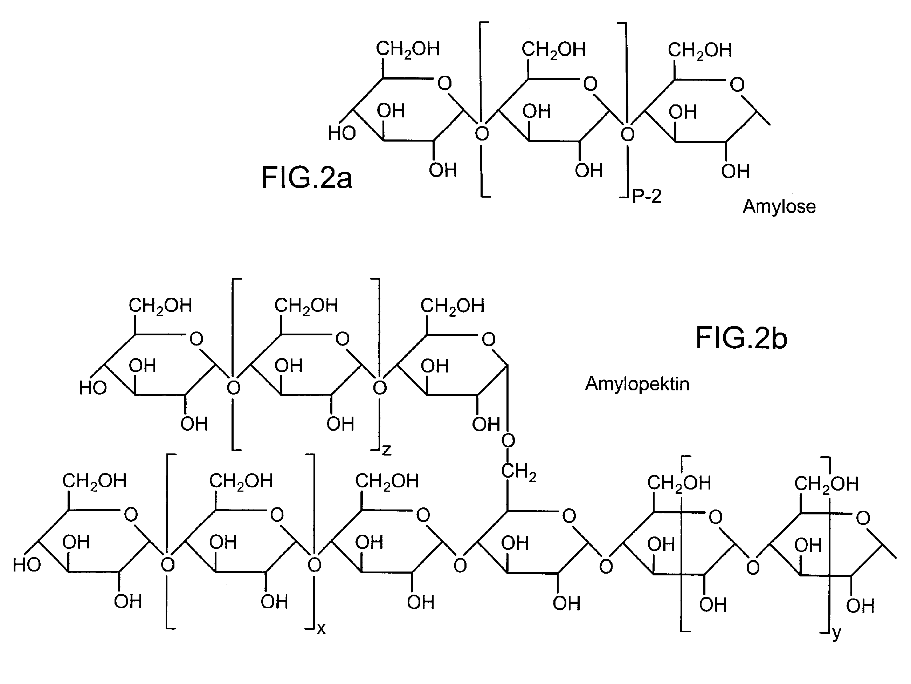

Amylose (s. Figur 2a) ist die unverzweigte Stärke aus linear über α(1-4)-Bindungen verbundenen Glucosemolekülen. Der Polymerisationsgrad liegt bei Getreidestärken zwischen 1000 und 2000. Bei Kartoffeln werden dagegen Ketten mit bis zu 4500 Glucoseeinheiten beobachtet. Diese Ketten muss man sich wiederum je nach dem Lösungszustand als mehr oder wenig ausgeprägte Helices vorstellen. Amylose neigt mit der Zeit zur Retrogradation. Man bezeichnet damit den weitgehendst irreversiblen Übergang vom gelösten bzw. dispergierten in einen unlöslichen, mikrokristallinen entquollenen Zustand.

Ein höherer Amylosegehalt > 50% Anteil steht für eine erhöhte Thermoresistenz, d.h., die Quellung und Verkleisterung setzt erst bei höheren Temperaturen ein. Beispiel: z.B. Amylomais mit 95% Amylosegehalt verkleistert erst bei sehr hohen Temperaturen, die bis nahezu 100° C reichen können (s. auch Tabelle 1).

Amylose ist im kalten Wasser schlecht dispergierbar. Beim Erhitzen der Amylose kommt es zu einer Quellung und zur Bildung eines Stärkekleisters. Man spricht in diesem Zusammenhang von der Verkleisterungstemperatur. Wie in Figur 2b gezeigt ist, versteht man unter Amylopektin eine verzweigte Stärke mit α(1-4)- und α(1-6)-Bindungen zwischen den Glucosemolekühlen. Die Verzweigungen der Ketten erfolgen dabei über die α(1-6)-Bindungen. Diese sind etwa alle 15 bis 30 Glucosesegmente unregelmäßig vorhanden. Man geht davon aus, dass auch Amylopektin in gewissen Grenzen Helices bildet. Amylopektin ist heißwasserlöslich. Natürliche Stärke ist je nach Herkunft eine Mischung dieser beiden Stärkefraktionen. Die meisten Stärken enthalten etwa zu 30 bis 40% Amylose und bestehen also zur Hauptsache aus Amylopektin.

Die nachfolgende Tabelle 1 zeigt unterschiedliche Stärken sowie deren Zusammensetzung und Verkleisterungstemperatur.

**Tabelle 1**

| Stärkequelle | Gehalt an | | Verkleisterungs-Temperatur [°C] |
|---|---|---|---|
| | Amylose [%] | Amylopektin [%] | |
| Bohnen | 24 | 76 | 64-67 |
| Erbsen | 35 | 65 | 57-70 |
| Gerste | 22 | 78 | 56-62 |
| Hafer | 27 | 73 | 56-62 |
| Hirse | 25 | 75 | 69-75 |
| - Wachshirse | 1 | 99 | 68-74 |
| Kartoffeln | 23 | 77 | 58-66 |
| Mais | 28 | 72 | 62-70 |
| - Amylomais | 51-95 | 5-49 | 67-87 |
| - Wachsmais | 1 | 99 | 63-72 |
| Maniok | | | 52-64 |
| Reis | 18 | 82 | 61-78 |
| - Wachsreis | 1 | 99 | 55-65 |
| Roggen | | | 57-70 |
| Weizen | 26 | 74 | 53-65 |

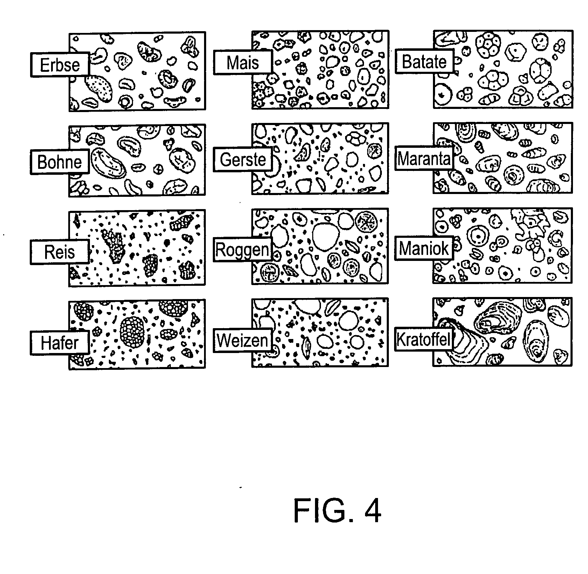

Stärkekörner sind in der Regel parakristallin aufgebaut. Je nach pflanzlicher Herkunft ist die Korngrößenverteilung diverser Stärken verschieden. Die nachfolgende Tabelle 2 zeigt die Korngrößenverteilung unterschiedlicher Stärketypen. Figur 4 zeigt Form, Größe und Größenverteilung verschiedener Stärken.

**Tabelle 2**

| | |
|---|---|
| Kartoffelstärke | 5 bis 100 µm |
| Tapiokastärke | 5 bis 35 µm |
| Maisstärke | 3 bis 25 µm |
| Weizenstärke | 2 bis 40 µm |
| Reisstärke | 1 bis 10 µm |

Die Eigenschaften der Stärke ist von deren Amylose/Amylopektinzusammensetzung und von der Komgröße abhängig.

Die Tabelle sowie die Figur 4 zeigt, dass ähnlich wie bei der Kieselgurfiltration mit verschiedenen Zusammensetzungen die Stabilität und die Trennschärfe des Filterkuchens beeinflusst und gewährleistet werden kann.

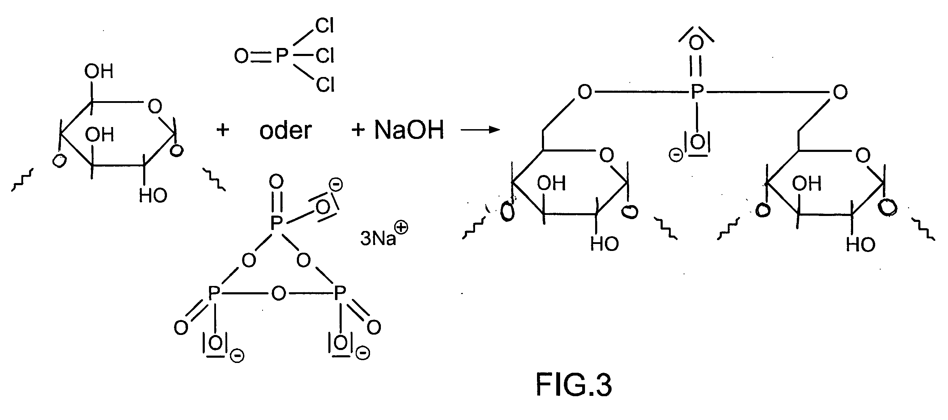

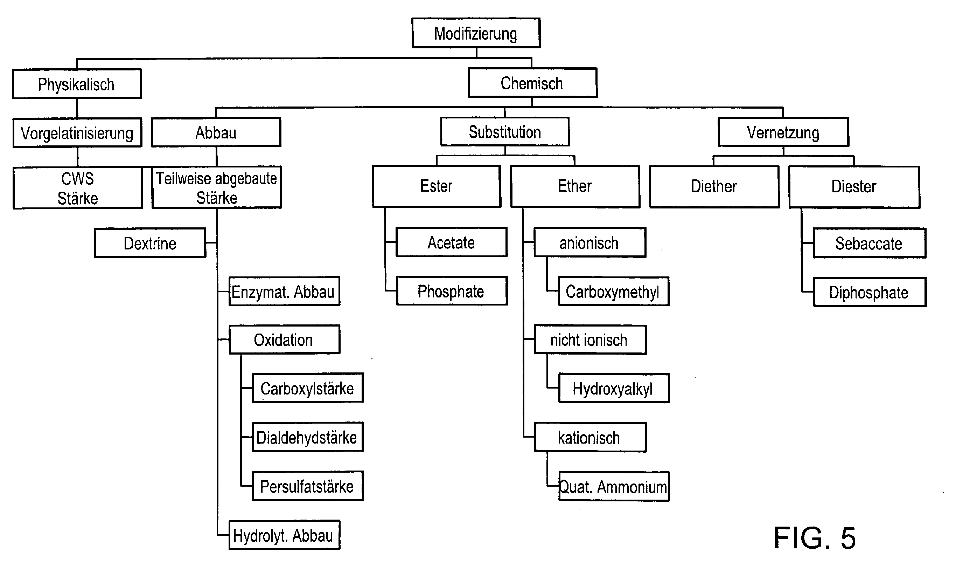

Die natürlichen Stärken weisen jedoch, wie zuvor erläutert, die Nachteile einer Verkleisterung bei Erhitzung auf, das Problem der Retrogradation sowie eine Heißwasserlöslichkeit, so dass sie als Filterhilfsmittel keine ausreichende Stabilität aufweisen. Aus diesem Grund werden die nativen Stärken oberflächenmodifiziert, so dass deren Löslichkeit in Wasser herabgesetzt wird und deren Festigkeit erhöht wird. Dies kann, wie aus Figur 5 ersichtlich ist, entweder chemisch oder physikalisch erfolgen. Insbesondere eignet sich die chemische Modifikation in Form der Veresterung bzw. Ver- etherung der Stärkekörner. Dabei werden die freien Hydroxylgruppen am Stärkemolekühl durch den Einbau von Ester- oder Ethergruppen verändert. Auf diese Weise wird die Verkleisterungstemperatur herabgesetzt. Die Lösungsstabilität und die Kaltfließfähigkeit verbessert und die Retrogradation verhindert. Ein Beispiel für einen derartigen Stärkeester ist in Figur 3 gezeigt. Die so modifizierten Stärken sind nicht kaltwasserlöslich, nicht heißwasserlöslich. Sie lösen sich in 2%iger heißer Lauge. Weiterhin sind die Stärkeprodukte im Bier inert und stabil gegenüber einem PH-Wert zwischen 4 und 7,5 und den in den Lebensmitteln üblichen Gehalten an gelöstem CO₂. Durch die schlechte Wasserlöslichkeit und die hohe Festigkeit der modifizierten Stärkederivate ergibt sich eine hohe Standzeit und eine hohe Durchflussrate.

Es können auch ionisch, z.B. anionisch gelagerte Stärkederivate verwendet werden, die zusätzlich zu den oben erwähnten Eigenschaften noch adsorptive Eigenschaften aufweisen.

Aufgrund der hohen Stabilität und der schlechten Wasserlöslichkeit der modifizierten Stärke ist es auch möglich, ausschließlich die modifizierte Stärke als Getränkefilterhilfsmittel zu verwenden, ohne dass weiteres Filterhilfsmittel zudosiert wird. Es ist jedoch auch der Einsatz von Gemischen aus modifizierten Stärken mit Fasern, mineralischen Substanzen, wie Kieselguren, Perliten, Aluminiumoxid, Titandioxid, Quarzmehl, PVPP sowie Fasern, wie etwa Baumwoll- und Zellulosefasern oder Zellulose oder Bastfasern möglich. Die oberflächenmodifizierten Stärken weisen eine hohe Filtrationsqualität und -quantität auf, wobei durch Wahl der entsprechenden Korngrößen, d.h., Wahl der entsprechenden Stärketypen sowie durch gezieltes Modifizieren der Stärken oder ggf. dem Zusatz von weiteren Substanzen, das Getränkefilterhilfsmittel ideal an den entsprechenden Filterprozess angepasst werden kann. Darüber hinaus besteht der Vorteil der Polysaccharide in der problemlosen Entsorgung, beispielsweise in der Kompostierung und Fermentierung oder Verfütterung als Tiermehlersatz. Sogar als Kohlenstoffquelle für Mikroorganismen, die fermativ Biopolymere produzieren, kann der Filtrationsschlamm eingesetzt werden.

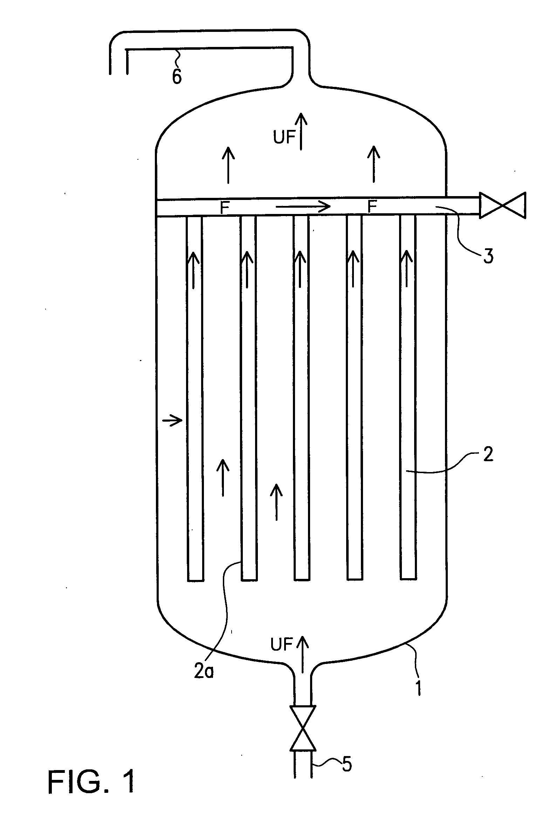

Nachfolgend wird ein erfindungsgemäßes Verfahren, bei dem modifizierte Stärke als Getränkefilterhilfsmittel verwendet wird, im Zusammenhang mit dem Kerzenfilter, der in Figur 1 gezeigt ist, beschrieben. Der Einsatz von modifizierten Stärken ist jedoch auch zur Würzefiltrationen in einem entsprechenden Gefäß denkbar, ebenso wie zur Heißtrubabscheidung und Glattwasserfiltration.

Figur 1 zeigt einen Kerzenfilter mit einem Filterkessel 1, einer Unfiltratzufuhr 5 für Unfiltrat UF, Filterkerzen 1, die beispielsweise aus gewundenem Draht gebildet sind und an einem sogen. Register 3 zur Filtratabfuhr aufgehängt sind. Der Filterkessel 1 weist weiter eine Ablaufleitung 6 für nicht gefiltertes Unfiltrat auf, das im Kessel einen Unfiltratstrom erzeugt, wobei das nicht gefilterte Unfiltrat erneut der Filtration zugeführt werden kann.

Bei dem erfindungsgemäßen Verfahren wird zunächst eine Voranschwemmung vorgenommen, wobei hydrophobe oberflächenmodifizierte Stärke als Getränkefilterhilfsmittel entweder dem Wasser oder bereits dem Unfiltrat zugeführt wird und über die Zulaufleitung 5 dem Filterkessel 1 zugeführt wird. Das "Unfiltrat" tritt dann durch die Spalte der Filterkerzen 1 in die Filterkerzen 1 ein und tritt über den Registerablauf 3 aus. Dabei lagert sich das Getränkefilterhilfsmittel 2a an der Außenseite des Filtermittels, hier an der Außenseite der Filterkerze 1 als Filterkuchen an. Nachdem der Filterkuchen 2a eine ausreichende Dicke erreicht hat, erfolgt die eigentliche Filtration des Unfiltrats, wobei modifizierte Stärke während der Filtration als laufende Dosage zugeführt wird. Das Unfiltrat kann dann durch den Filterkuchen 2a hindurch in die Filterkerzen 1 eintreten und verlässt dann als Filtrat F über den Registerablauf 3 die Filteranordnung. Dadurch, dass die modifizierte Stärke nicht wasserlöslich ist und ausreichend fest gegenüber physikalischen Einflüssen ist, kann sich ein stabiler Filterkuchen anlagem. Wenn nach mehreren Trennläufen das Filtermittel, hier die Filterkerze 1, gereinigt werden muss, kann dies beispielsweise über Heißdampf erfolgen. Der so entstandene Filtrationsschlamm kann dann beispielsweise kompostiert oder fermentiert werden oder als Tiermehlersatz verfüttert werden. Es ist auch möglich, den Filterschlamm enzymatisch zu regenerieren (z.B. durch Proteolyse) und dann wieder als Filterhilfsmittel zu verwenden.

Zusammenfassend sollte festgehalten werden, dass oberflächenmodifizierte Stärke ein umweltfreundliches Filterhilfsmittel darstellt, dessen Preis im Wesentlichen dem von Kieselgur entspricht, das jedoch keine hohen Entsorgungskosten (wie etwa 600,00 DM/m³ bei Kieselgur) mit sich bringt. Ganz im Gegenteil stellt der nach dem Reinigen des Filtermittels entstandene Filterschlamm einen Wertstoff dar, der entweder kompostiert werden kann oder als Futtermittel verwendet werden kann oder aber auf einfache Art und Weise enzymatisch regeneriert werden kann. Weiterhin ist Stärke toxisch unbedenklich, was insbesondere bei der Lebensmittel- und Genussmittelherstellung von großer Bedeutung ist und ist darüber hinaus im Bier inert und stabil gegenüber einem PH-Wert zwischen 4 bis 7,5 und den in Lebensmitteln üblichen Gehalten an gelöstem CO₂. Die modifizierte Stärke wurde hier als Getränkefilterhilfsmittel beschrieben. Ein solches Getränkefilterhilfsmittel ist jedoch nicht nur für Getränke sondern für alle flüssigen und pastösen Lebensmittel geeignet.

## Patentansprüche

1. Getränkefilterhilfsmittel,
**dadurch gekennzeichnet, dass**
es zur Verringerung der Löslichkeit oberflächenmodifizierte Stärke umfasst.

2. Getränkefilterhilfsmittel nach Anspruch 1,
**dadurch gekennzeichnet, dass**
die Stärke chemisch oder physikalisch modifiziert ist.

3. Getränkefilterhilfsmittel nach Anspruch 1,
**dadurch gekennzeichnet, dass**
die oberflächenmodifizierte Stärke ein Stärkeester oder Stärkeether ist.

4. Getränkefilterhilfsmittel nach Anspruch 1,
**dadurch gekennzeichnet, dass**
die oberflächenmodifizierte Stärke mit Phosphorsäure veresterte Stärke ist.

5. Getränkefilterhilfsmittel nach mindestens einem der vorhergehenden Ansprüche,
**dadurch gekennzeichnet, dass**
das Getränkefilterhilfsmittel neben der oberflächenmodifizierten Stärke auch mindestens einen Stoff der folgenden Gruppe umfasst: mineralische Substanzen, wie Kieselguren, Perliten, Aluminiumoxid, Titandioxid, Quarzmehl und/oder PVPP und/oder Fasern, wie etwa Baumwoll- und Zellulosefasem, Bastfasern.

6. Getränkefilterhilfsmittel nach mindestens einem der vorhergehenden Ansprüche,
**dadurch gekennzeichnet, dass**
die Korngröße der modifizierten Stärke in einem Bereich von 1 bis 100 µm liegt.

7. Getränkefilterhilfsmittel nach Anspruch 6,
**dadurch gekennzeichnet, dass**
die Korngröße entsprechend einer Feingur in einem Bereich von 1 bis 10 µm, entsprechend einer Mittelgur in einem Bereich von 40 bis 50 µm oder entsprechend einer Grobgur in einem Bereich von 70 bis 100 µm liegt.

8. Getränkefilterhilfsmittel nach mindestens einem der vorhergehenden Ansprüche,
**dadurch gekennzeichnet, dass**
die oberflächenmodifizierte Stärke ein ionisch geladenes Stärkederivat ist.

9. Verwendung eines Getränkefilterhilfsmittels nach mindestens einem der Ansprüche 1 bis 8 zur Filtration von Getränken, insbesondere von Bier.

10. Verfahren zur Getränkefiltration, insbesondere zur Bierfiltration,
**dadurch gekennzeichnet, dass**
- ein Getränkefilterhilfsmittel, das hydrophobe oberflächenmodifizierte Stärke umfasst, zur Erzeugung eines Filterkuchens auf ein Filtermittel angeschwemmt wird,
- das Unfiltrat zur Filtration durch den Filterkuchen und das Filtermittel geleitet wird und als Filtrat abgeführt wird.

11. Verfahren zur Getränkefiltration,
**dadurch gekennzeichnet, dass**
die Stärke chemisch oder physikalisch modifiziert ist.

12. Verfahren zur Getränkefiltration nach Anspruch 10,
**dadurch gekennzeichnet, dass**
ein Getränkefilterhilfsmittel angeschwemmt wird, das einen Stärkeester oder einen Stärkeether umfasst.

13. Verfahren zur Getränkefiltration nach einem der Ansprüche 10 bis 12,
**dadurch gekennzeichnet, dass**
dem Getränkefilterhilfsmittel neben der oberflächenmodifizierten Stärke auch mindestens ein Stoff der folgenden Gruppe zugesetzt wird: mineralische Substanzen, wie Kieselguren, Perliten, Aluminiumoxid, Titandioxid und/oder Quarzmehl, PVPP und/oder Fasern, wie etwa Bastfasern, Baumwoll- und Zellulosefasern oder Zellulose.

14. Verfahren zur Getränkefiltration nach mindestens einem der Ansprüche 10 bis 13,
**dadurch gekennzeichnet, dass**
das angeschwemmte Getränkefilterhilfsmittel ein ionisch geladenes Stärkederivat umfasst.

15. Verfahren zur Getränkefiltration nach mindestens einem der Ansprüche 10 bis 14,
**dadurch gekennzeichnet, dass**
nach der Filtration das Filtermittel von dem Getränkefilterhilfsmittel gereinigt wird.

16. Verfahren zur Getränkefiltration nach Anspruch 13,
**dadurch gekennzeichnet, dass**
nach der Filtration das Filtermittel durch Heißdampf von dem Getränkefilterhilfsmittel gereinigt wird.

17. Verfahren zur Getränkefiltration nach mindestens einem der Ansprüche 10 oder 14,
**dadurch gekennzeichnet, dass**
das von dem Filtermittel abgetrennt Getränkefilterhilfsmittel enzymatisch regeneriert und erneut als Getränkefilterhilfsmittel eingesetzt wird.
